Europäisches Patentamt

**European Patent Office**

Office européen des brevets

(11) Veröffentlichungsnummer: **0 187 929**
A2

(12) **EUROPÄISCHE PATENTANMELDUNG**

(21) Anmeldenummer: 85115043.3

(22) Anmeldetag: 27.11.85

(51) Int. Cl.⁴: **C 08 L 77/12**
C 08 L 23/26, C 08 K 3/04

(30) Priorität: 12.01.85 DE 3500829

(43) Veröffentlichungstag der Anmeldung:
23.07.86 Patentblatt 86/30

(84) Benannte Vertragsstaaten:
AT BE CH DE FR GB IT LI NL SE

(71) Anmelder: HÜLS AKTIENGESELLSCHAFT
Patentabteilung / PB 15 - Postfach 13 20
D-4370 Marl 1(DE)

(72) Erfinder: Dröscher, Michael, Dr.
Hetkerbruch 34
D-4270 Dorsten 11(DE)

(72) Erfinder: Horlbeck, Gernot, Dr.
In der Thiebrei 80
D-4358 Haltern(DE)

(72) Erfinder: Burzin, Klaus, Dr.
Wellerfeldweg 164
D-4370 Marl(DE)

(54) **Kälteschlagzähe, thermoplastisch verarbeitbare Formmassen.**

(57) Kälteschlagzähe, thermoplastisch verarbeitbare Formmasse aus

A. 95 bis 60 Gew.-Teilen Poly(etheresteramid) und

B. 5 bis 40 Gew.-Teilen eines Adduktes aus

I. 92,5 bis 99,5 Masse-% eines Poly($\alpha$-olefin) - Kautschuks enthaltend

a. 50 bis 85 Gew.-Teile Ethen

b. 15 bis 50 Gew.-Teile Propen und/oder Buten-(1) und c. ggf. ein oder mehrere Multiene sowie

II. 0,5 bis 7,5 Masse-% eines Gemisches von Maleinsäureanhydrid und Maleinsäure- und/oder Fumarsäure-di-($C_1$ bis $C_{10}$-alkyl)-ester im Masseverhältnis 1 : 5 bis 1 : 0,5.

## Kälteschlagzähe, thermoplastisch verarbeitbare Formmassen

Gegenstand der Erfindung sind kälteschlagzähe, thermoplastisch verarbeitbare Formmassen.

Poly(etheresteramide) sind bekannt. Es ist weiterhin
bekannt, daß die Polyetheranteile als innere Weichmacher wirken und so die Schlagzähigkeit der Poly-
(etheresteramide) deutlich über das Niveau der reinen Polyamidkomponente angehoben wird (Angew. Makromol.
Chem. 74, (1978) 49; DE-OSS 27 12 987, 29 30 343,
29 32 234, 29 36 976, 29 36 977). Allerdings nimmt
der E-Modul der Formmassen mit zunehmendem Polyethergehalt stark ab, und die Schlagzähigkeit von z. B.
mit Leitfähigkeitsruß gefüllten Formmassen erreicht
nicht das für viele Anwendungsbereiche notwendige
Niveau.

Die DE-OS 32 42 827 lehrt, daß Formmassen aus 1 bis 99
Teilen Poly(etheresteramid) und 99 bis 1 Teilen Polyolefin  eine gegenüber der Poly(etheresteramid)-Komponente erhöhte Stoßfestigkeit besitzen. Allerdings handelt es sich bei den Polyolefinen um Polypropylen,
Polyethylen, ihre Gemische oder Copolymere sowie um
ionomere Harze. Solche Formmassen reichen in ihrem
Eigenschaftsniveau nicht aus, da entweder im Falle der
Copolyolefine die Anbindung der nicht funktionalisierten
Olefinkomponente unvollständig ist, oder im Falle der
ionomeren Harze die schlagzähmachende Wirkung nur
gering ist.

EP-OS 84 277 beschreibt Textilfasern, die 1 bis 99
Teile Polyolefin und 99 bis 1 Teile Poly(etheresteramid) enthalten.

Aufgabe der Erfindung war es, Formmassen auf der Basis von Poly(etheresteramiden) aufzufinden, die ein hohes Zähigkeitsniveau erreichen, ohne daß der E-Modul herabgesetzt wird. Auch durch einen Füllstoff, der die Versprödung der Formmassen bewirken könnte, sollte das Zähigkeitsniveau nicht abgesenkt werden.

Diese Aufgabe wurde gelöst durch Formmassen, bestehend aus

A. 95 bis 60 Gew.-Teilen Poly(etheresteramid) mit einer relativen Viskosität von mindestens 1,5 und

B. 5 bis 40 Gew.-Teilen eines Adduktes aus

  I. 92,5 bis 99,5 Masse-% eines Poly($\alpha$-olefin)-Kautschuks mit 0 bis 15 Doppelbindungen/100 C-Atome und einer Mooney-Viskosität ($ML_{1+4}$; 100 °C; DIN 53 523) von 30 bis 130 enthaltend a. 50 bis 85 Gew.-Teilen Ethen b. 15 bis 50 Gew.-Teilen Propen und/oder Buten-(1) und c. ggf. ein oder mehrere Multiene mit isolierten Doppelbindungen, wobei die Komponenten a., b. und c. sich zu 100 Gew.-Teilen aufaddieren sollen,

  sowie

  II. 0,5 bis 7,5 Masse-% eines Gemisches von Maleinsäureanhydrid und Maleinsäure- und/oder Fumarsäure-di-($C_1$ bis $C_{10}$-alkyl)-ester im Masseverhältnis 1 : 5 bis 1 : 0,5.

Die Poly(etheresteramide) (Komponente A.) werden durch Kondensieren von

1. einer oder mehrerer polyamidbildender Verbindungen aus der Gruppe der $\omega$-Aminocarbonsäure bzw. Lactame mit 6 bis 20 C-Atomen, vorzugsweise mit 6 bis 12 C-Atomen,

2. einem Poly(alkylenglykol) mit einem Molekulargewicht im Bereich von 160 bis 3 000,

3. einer oder mehrerer weiterer aliphatischer, cycloaliphatischer oder aromatischer Dicarbonsäuren

erhalten.

Als polyamidbildende Verbindung (A.1) werden ω-Aminocarbonsäuren bzw. Lactame mit mindestens 6 C-Atomen, vorzugsweise Laurinlactam, ω-Aminododecansäure oder ω-Aminoundecansäure, verwendet. Eine weitere bevorzugte Möglichkeit besteht darin, anstelle der monomolekularen Aminocarbonsäuren, deren Polymere mit einem mittleren Molekulargewicht von 500 bis 20 000, vorzugsweise von 4 000 bis 10 000, einzusetzen.

Die angegebenen Werte für die mittleren Molekulargewichte ergeben sich durch Bestimmung der Viskositätszahl.

Poly(alkylenglykole) der Komponente A.2 sind Poly-(ethylenglykol), Poly(propylenglykol) oder Poly-(tetrahydrofuran)diol mit jeweils einem mittleren Molekulargewicht ($\bar{M}_n$; bestimmt durch Endgruppen-titration) im Bereich von 160 bis 3 000, vorzugsweise 300 bis 2 200, insbesondere von 500 bis 1 200. Bevorzugt ist die Verwendung von Poly(tetrahydrofuran)diol mit einem mittleren Molekulargewicht von 500 bis 2 000.

Die Komponente A.3 wird durch aliphatische, cycloaliphatische oder aromatische Dicarbonsäuren mit 4 bis 11 C-Atomen im Kohlenstoffgerüst gebildet. Beispielsweise seien Adipinsäure, Pimelinsäure, Korksäure, Azelainsäure, Sebazinsäure, Dodecandisäure, Hexahydroterephthalsäure oder die Phthalsäuren genannt. Bevorzugt für diese Komponente werden Terephthalsäure und Dodecandisäure eingesetzt.

Die Poly(etheresteramide) sind in der Weise aufgebaut, daß sich das Gewichtsverhältnis der Komponente A.1 und (A.2 + A.3) im Bereich von 95 : 5 bis zu 50 : 50 bewegt. Bevorzugt ist ein Gewichtsverhältnis im Bereich von 90 - 60 : 10 - 40. Die Hydroxyl- und Carboxylgruppen von (A.2 + A.3) liegen in etwa äquivalenten Anteilen, d. h. in einem Verhältnis von etwa 1 : 0,95 bis 1 : 1,05, vor.

Bevorzugte Poly(etheresteramide) werden durch Umsetzung von Laurinlactam, Poly(tetrahydrofuran)diol mit einem mittleren Molgewicht von 500 bis 2 000 und Dodecandisäure oder Terephthalsäure hergestellt. Das mittlere Molekulargewicht dieser Produkte liegt im Bereich von 5 000 bis 40 000, vorzugsweise 8 000 bis 25 000.

Die Herstellung derartiger Poly(etheresteramide) ist beispielsweise aus DE-OSS 27 12 987, 29 30 343, 29 32 234, 29 36 976 bzw. 29 36 977 bekannt.

Es können auch Gemische von Poly(etheresteramiden) eingesetzt werden, wobei die Mischungsverhältnisse für die Erfindung unkritisch sind.

Erfindungsgemäß geeignete Poly(etheresteramide) weisen eine relative Lösungsviskosität ($\eta_{rel}$) von mindestens 1,5, vorzugsweise von 1,8 bis 2,3, auf.

Die zur Herstellung der Komponente B. eingesetzten Poly($\alpha$-olefin)-Kautschuke können als amorpher Typ, Sequenz-Typ oder gemischter Typ vorliegen. Diese Produkte sind handelsüblich.

Die Kautschuke werden im allgemeinen als Pulver, Krümel oder Granulat eingesetzt und können $<$ 5 Masse-%, bezogen auf den Kautschuk eines Trennpulvers, wie beispielsweise Polyethylen, Talkum oder Aerosil, enthalten.

Die Poly($\alpha$-olefin)-Kautschuktypen werden durch Polymerisation von

a. 50 bis 85 Gew.-Teilen, vorzugsweise von 60 bis 80 Gew.-Teilen, Ethen,

b. 15 bis 50 Gew.-Teilen, vorzugsweise von 20 bis 40 Gew.-Teilen Propen und/oder Buten-(1)

erhalten. Daneben können bei der Polymerisation ggf. noch c. ein oder mehrere Multiene mit isolierten Doppelbindungen

eingesetzt werden. Der Anteil an diesen Multienen im Kautschuk beträgt 0,5 bis 10 Gew.-Teile, vorzugsweise 1 bis 5 Gew.-Teile. (Die Komponenten a., b. und c. sollen sich zu 100 Gew.-Teilen aufaddieren). Entsprechend dem Anteil an Multien-Komponente weist der Kautschuk 0 bis 15 Doppelbindungen/100 C-Atome auf.

Die Mooney-Viskosität ($ML_{1+4}$; 100 °C; DIN 53 523) des Poly($\alpha$-olefin)-Kautschuks beträgt 30 bis 130, vorzugsweise 35 bis 110.

Zur Funktionalisierung wird an den Kautschuk ein Gemisch von Maleinsäureanhydrid und Maleinsäure- und/oder Fumarsäure-di-($C_1$ bis $C_{10}$-alkyl)-ester addiert. Bevorzugt verwendet werden Diester der Fumarsäure. Als Alkoholkomponente werden bevorzugt n-Butanol, n-Heptanol und n-Pentanol eingesetzt. Das Masseverhältnis von Maleinsäureanhydrid zu Diester beträgt 1 : 5 bis 1 : 0,5, vorzugsweise 1 : 2 bis 1 : 0,5.

In dem Addukt (Komponente B.) beläuft sich der Anteil an Poly($\alpha$-olefin)-Kautschuk auf 92,5 bis 99,5 Masse-%, vorzugsweise auf 96 bis 99 Masse-%.

Bei einer bevorzugten Verfahrensvariante zur Funktionalisierung des Kautschuks wird zunächst bei Raumtemperatur eine Mischung aus Kautschuk, Maleinsäureanhydrid und Diester hergestellt und anschließend diese Mischung in den Reaktor gegeben, in dem die Umsetzung stattfindet. In einer anderen bevorzugten Variante werden die Komponenten in verschiedene Zonen eines Extruders gegeben, wo dann die gewünschte Umsetzung stattfindet.

Zusätzliche Einzelheiten im Hinblick auf die Herstellung des Adduktes können DE-OS 33 35 706 entnommen werden.

Die Poly(etheresteramide) sind zu 95 bis 60 Gew.-Teilen, vorzugsweise zu 90 bis 70 Gew.-Teilen, in den erfindungsgemäßen Formmassen enthalten. Der Rest zu 100 Gew.-Teilen wird durch die Komponente B. gebildet.

Die Herstellung dieser Formmassen erfolgt in der Schmelze und in bekannter Weise; beispielsweise in einem Doppelschneckenkneter, der vorteilhafterweise mit Knetblöcken ausgerüstet ist, oder in einem Entgasungsextruder.

In die erfindungsgemäßen Formmassen können weitere Polymere, wie z. B. Polyamide (DE-OS 27 16 004) und Poly(alkylenterephthalate) (DE-OS 29 30 343), eingearbeitet werden. Diese angeführten Mischungsbestandteile sind in den so erhaltenen Mischungen zu 1 bis 40, vorzugsweise 5 bis 25 Gew.-Teilen enthalten.

Übliche Zusatz- und Hilfsstoffe, wie Pigmente, Verarbeitungsmittel, weitere Füll- und Verstärkungsstoffe, Hydrolyse-, Thermo- oder UV-Stabilisatoren, können sowohl während der Herstellung als auch in die fertigen Formmassen eingearbeitet werden.

Die erfindungsgemäßen Formmassen eignen sich besonders bei Anwendung von Füllstoffen, die leicht zur Versprödung der gefüllten Formmassen führen. Derartige Füllstoffe können in Mengen von 1 bis 30 Masse-%, vorzugs-

weise von 5 bis 15 Masse-%, und insbesondere bevorzugt von 5 bis 10 Masse-%, eingearbeitet werden. Bevorzugt aus dieser Gruppe von Füllstoffen ist Leitfähigkeitsruß.

Gegenüber dem Stand der Technik weisen die erfindungsgemäßen Formmassen eine Reihe von unerwarteten Vorteilen auf: Die Zähigkeit in der Kälte wird stark verbessert, ohne daß der E-Modul wesentlich vermindert wird, und es können Füllstoffe, die eine Versprödung der Formmasse bewirken, eingearbeitet werden, ohne daß das Zähigkeitsniveau stark abfällt. -

Die in der Beschreibung und den Beispielen angeführten Parameter wurden mittels der nachstehend genannten Meßmethoden bestimmt:

Die <u>relative Viskosität</u> ($\eta_{rel}$) der Poly(etheresteramide) und des Polyamids wurde in m-Kresol bei 25 °C (Konzentration: 0,5 g/dl) gemäß DIN 53 727 gemessen.

Die <u>Mooney-Viskosität</u> des Poly($\alpha$-olefin)-Kautschuks wurde gemäß DIN 53 523, Teil 1 bis 3 (unter den Bedingungen $ML_{1+4}$; 100 °C), bestimmt.

Die <u>Kerbschlagzähigkeit</u> ($a_K$) der Formmassen wurde nach DIN 53 453 an Normkleinstäben mit Rechteckkerbe gemessen.

Der <u>E-Modul</u> wird aus dem Zugversuch nach DIN 53 457 bestimmt.

Mit Buchstaben gekennzeichnete Versuche sind nicht erfindungsgemäß.

## Beispiele

### Herstellung des funktionalisierten Poly($\alpha$-olefin)-Kautschuks (Komponente B.)

95 Gew.-Teile eines Poly($\alpha$-olefin)-Kautschuks (75 Masse-% Ethylen, 23 Masse-% Propylen, 2 Masse-% Ethylidennorbornen) mit einer Mooney-Viskosität von 85 werden in die Einzugszone eines Zweischneckenextruders eindosiert. In einer weiteren Einzugszone wird eine in einem Behälter hergestellte Mischung aus 2,5 Gew.-Teilen Maleinsäureanhydrid und 2,5 Gew.-Teilen Fumarsäure-di-n-butylester dem geschmolzenen Kautschuk zugegeben. Die Heizzonen des Extruders sind dabei, mit Ausnahme der ersten, gekühlten, auf 300 °C eingestellt. Es wird granuliert und auf eine Restfeuchte von weniger als 1 % getrocknet.

### Herstellung der Formmassen

Das Granulat der Komponente B. mischt man mit der in Tabelle 1 aufgeführten Komponente A., gegebenenfalls zusätzlich mit handelsüblichem Leitfähigkeitsruß (KETJENBLACK[R] EC) (Tabelle 2) in den dort angegebenen Mengenverhältnissen und schmilzt das Gemenge in einem Doppelschneckenkneter, dessen Dispergierwirkung durch Knetblöcke verstärkt wurde, auf. Es wird granuliert und auf eine Restfeuchte von weniger als 0,5 % getrocknet. Bei den Versuchen A bis D werden die in den Tabellen angegebenen Komponenten, ohne Anwesenheit der Komponente B, in gleicher Weise umgeschmolzen und granuliert.

Tabelle 1

| Beispiel | Komponente A. [Gew.-Teile] | Zusammensetzung*) LL | DDS | [Masse-%] PTHF | $\eta_{rel}$ | Komponente B. [Gew.-Teile] | $a_K$ [kJ/m²] 23 °C | -20 °C | E-Modul [mPa] |
|---|---|---|---|---|---|---|---|---|---|
| A | 100 | 100 | - | - | 1,7 | - | 8 | 6 | 1 500 |
| B | 100 | 85 | 2,8 | 12,2 | 1,9 | - | kB**) | 5 | 490 |
| C | 100 | 75 | 5,3 | 19,7 | 1,9 | - | kB**) | 10 | 360 |
| 1 | 100 | 85 | 2,8 | 12,2 | 1,9 | 10 | kB**) | 16 | 425 |
| 2 | 100 | 85 | 2,8 | 12,2 | 1,9 | 15 | kB**) | 22 | 420 |
| 3 | 100 | 90 | 1,9 | 8,1 | 1,9 | 15 | kB**) | 25 | 525 |

*)  LL = Laurinlactam; DDS = Dodecandicarbonsäure;

PTHF = $\alpha$,$\omega$-Dihydroxy(oxytetramethylen) ($\bar{M}_n$ = 1 000)

**)  kB = kein Bruch

Tabelle 2

| Beispiel | Komponente A. $[Gew.-Teile]$ | Komponente A. Zusammensetzung*) $[Masse-\%]$ | | | $\eta_{rel}$ | Komponente B. $[Gew.-Teile]$ | Leitfähigkeitsruß $[Gew.-Teile]$ | $a_K [kJ/m^2]$ 23 °C |
|---|---|---|---|---|---|---|---|---|
| | | LL | DDS | PTHF | | | | |
| D | 100 | 85 | 2,8 | 12,2 | 1,9 | - | 10 | 12 |
| 4 | 100 | 85 | 2,8 | 12,2 | 1,9 | 15 | 10 | 24 |

*)  LL = Laurinlactam; DDS = Dodecandicarbonsäure;

PTHF = $\alpha$ ,$\omega$-Dihydroxy(oxytetramethylen) ($\bar{M}_n$ = 1 000)

0187929

Patentansprüche:

1. Kälteschlagzähe, thermoplastisch verarbeitbare Formmasse aus

   A. 95 bis 60 Gew.-Teilen Poly(etheresteramid) mit einer relativen Viskosität von mindestens 1,5 und

   B. 5 bis 40 Gew.-Teilen eines Adduktes aus

   I. 92,5 bis 99,5 Masse-% eines Poly($\alpha$-olefin)-Kautschuks mit 0 bis 15 Doppelbindungen/100 C-Atome und einer Mooney-Viskosität $(ML_{1+4};$ 100 °C; DIN 53 523) von 30 bis 130 enthaltend a. 50 bis 85 Gew.-Teilen Ethen b. 15 bis 50 Gew.-Teilen Propen und/oder Buten-(1) und c. ggf. ein oder mehrere Multiene mit isolierten Doppelbindungen, wobei die Komponenten a., b. und c. sich zu 100 Gew.-Teilen aufaddieren sollen,

   sowie

   II. 0,5 bis 7,5 Masse-% eines Gemisches von Maleinsäureanhydrid und Maleinsäure- und/oder Fumarsäure-di-($C_1$ bis $C_{10}$-alkyl)-ester im Masseverhältnis 1 : 5 bis 1 : 0,5.

2. Formmasse nach Anspruch 1, dadurch gekennzeichnet, daß sie bis zu 30 Gew.-Teile (bezogen auf 100 Gew.-Teile der Formmasse) Füllstoffe enthalten.

3. Formmasse nach Anspruch 2, dadurch gekennzeichnet, daß als Füllstoff Leitfähigkeitsruß verwendet wird.